(19) Europäisches Patentamt
European Patent Office
Office européen des brevets

(11) EP 2 504 178 B1

(12) # FASCICULE DE BREVET EUROPEEN

(45) Date de publication et mention de la délivrance du brevet:
**20.05.2015 Bulletin 2015/21**

(21) Numéro de dépôt: **10776752.7**

(22) Date de dépôt: **17.11.2010**

(51) Int Cl.:
***B60C 1/00*** *(2006.01)* ***C08L 9/00*** *(2006.01)*
***C08J 9/10*** *(2006.01)* *C08L 91/00 (2006.01)*
*C08K 5/23 (2006.01)* *C08K 3/36 (2006.01)*

(86) Numéro de dépôt international:
**PCT/EP2010/067669**

(87) Numéro de publication internationale:
**WO 2011/064128 (03.06.2011 Gazette 2011/22)**

(54) **BANDAGE POUR VEHICULE DONT LA BANDE DE ROULEMENT COMPORTE UNE COMPOSITION DE CAOUTCHOUC THERMO-EXPANSIBLE**

BEREIFUNG MIT REIFENLAUFFLAECHE BESTEHEND AUS THERMISCH AUSFEHNBAREM KAUTSCHUK

TIRE EQUIPEMENT WHERE THE TIRE TREAD COMPRISES A THERMO-EXPANSIBLE RUBBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2009 FR 0958432**

(43) Date de publication de la demande:
**03.10.2012 Bulletin 2012/40**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **MAESAKA, Masayuki**
  **Ota-shi**
  **Gunma 373-8668 (JP)**
- **PAGANO, Salvatore**
  **Tokyo 102-8176 (JP)**

(74) Mandataire: **Ribière, Joel**
**Manufacture Française des Pneumatiques Michelin**
**23, place des Carmes-Déchaux**
**DGD/PI - F35 - Ladoux**
**63040 Clermont-Ferrand Cedex (FR)**

(56) Documents cités:
**EP-A1- 0 969 040** **EP-A1- 2 042 549**
**DE-A1- 10 258 436** **FR-A1- 2 877 348**

- **DATABASE WPI Week 199305 Thomson Scientific, London, GB; AN 1993-041685 XP002585232, -& JP 4 368205 A (BRIDGESTONE CORP) 21 décembre 1992 (1992-12-21)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### 1. DOMAINE DE L'INVENTION

L'invention est relative aux compositions caoutchouteuses utilisées comme bandes de roulement de bandages pour véhicules, pneumatiques ou non-pneumatiques, en particulier de bandages pneumatiques « hiver » aptes à rouler sur des sols recouverts de glace ou verglas sans être pourvus de clous (aussi appelés bandages pneumatiques *"studless"*).

Elle est plus particulièrement relative aux bandes de roulement de bandages pneumatiques hiver spécifiquement adaptées à un roulage sous des conditions dites de "glace fondante" rencontrées dans un domaine de températures typiquement comprises entre -5°C et 0°C. On rappelle en effet que, dans un tel domaine, la pression des pneumatiques au passage d'un véhicule provoque une fusion superficielle de la glace qui se recouvre d'un mince film d'eau nuisible à l'adhérence de ces bandages pneumatiques.

### 2. ETAT DE LA TECHNIQUE

Pour éviter les effets néfastes des clous, notamment leur forte action abrasive sur le revêtement du sol lui-même et un comportement routier notablement dégradé sur sol sec, les manufacturiers de bandages pneumatiques ont proposé différentes solutions consistant à modifier la formulation des compositions de caoutchouc elles-mêmes.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en définitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant notamment à incorporer des poudres hydrosolubles dans la composition constitutive de la bande de roulement. De telles poudres se solubilisent plus ou moins au contact de la neige ou de la glace fondue, ce qui permet d'une part la création à la surface de la bande de roulement de porosités susceptibles d'améliorer l'accrochage de la bande de roulement sur le sol et d'autre part la création de gorges jouant le rôle de canaux d'évacuation du film liquide créé entre le bandage et le sol. A titre d'exemples de telles poudres hydrosolubles, on peut citer par exemple l'emploi de poudre de cellulose, d'alcool vinylique ou d'amidon, ou encore des poudres de gomme de guar ou de gomme de xanthane (voir par exemple demandes de brevet JP 3-159803, JP 2002-211203, EP 940 435, WO 2008/080750, WO 2008/080751).

Il a également été proposé d'utiliser des particules de poudre qui ne sont ni à haute dureté ni hydrosolubles, aptes malgré tout à générer une microrugosité de surface efficace (voir en particulier demandes de brevet WO 2009/083125 et WO 2009/112220).

Enfin, pour améliorer les performances d'adhérence sur glace d'une bande de roulement, il est également bien connu d'utiliser une couche de caoutchouc mousse à base d'élastomère diénique, d'un agent d'expansion (*"blowing agent"*) et divers autres additifs. Ces agents d'expansion, tels que par exemple des composés nitro, sulfonyl ou azo, sont aptes à libérer lors d'une activation thermique, par exemple lors de la vulcanisation du bandage pneumatique, une quantité de gaz importante, notamment de l'azote, et ainsi conduire à la formation de bulles au sein d'un matériau suffisamment mou tel qu'une composition de caoutchouc comportant de tels agents d'expansion. De telles formulations de caoutchouc mousse pour bandages pneumatiques hiver ont été décrites par exemple dans les documents brevet JP 2003-183434, JP 2004-091747, JP 2006-299031, JP 2007-039499, JP 2007-314683, JP2008-001826, JP 2008-150413, EP 826 522, US 5 147 477, US 6 336 487.

Les documents EP 969 040 (D1) et JP 04-368205 (D2), cités dans le rapport de recherche, peuvent divulguer l'utilisation combinée d'une charge renforçante et d'un agent d'expansion ou « *foaming agent* », voire d'un composé thermofusible, mais ceci en faible ou très faible quantité. En particulier, D1 n'utilise que 50 pce de charge renforçante (« *carbon black »* SAF dans les tableaux 1 et 2) tandis que D2 utilise au plus 45 pce de noir de carbone (N110 dans le tableau de la dernière page) et nettement moins de 5 pce d'agent d'expansion (0,5 à 3,8 pce d'OBSH dans le tableau de la dernière page).

### 3. BREVE DESCRIPTION DE L'INVENTION

Au cours de leurs recherches sur la technologie ci-dessus relative à l'utilisation de caoutchouc mousse, les Demanderesses ont découvert une formulation spécifique à base d'un taux élevé d'un agent d'expansion et d'un composé thermofusible combinés, qui permet d'améliorer fortement l'adhérence sur glace fondante des bandes de roulement.

En conséquence, la présente invention concerne un bandage dont la bande de roulement comporte, à l'état

non vulcanisé, une composition de caoutchouc thermo-expansible comportant au moins un élastomère diénique, 70 à 120 pce d'une charge renforçante, entre 5 et 25 pce d'un agent d'expansion, entre 5 et 25 pce d'un composé thermofusible dont la température de fusion est comprise entre 70°C et 150°C, la teneur totale en agent d'expansion et composé thermofusible étant supérieure à 15 pce.

L'invention concerne également un bandage à l'état vulcanisé obtenu après cuisson (vulcanisation) du bandage cru conforme à l'invention tel que décrit ci-dessus.

Les bandages de l'invention sont particulièrement destinés à équiper des véhicules à moteur de type tourisme, incluant les véhicules 4x4 (à quatre roues motrices) et véhicules SUV ("*Sport Utility Vehicles*"), des véhicules deux roues (notamment motos) comme des véhicules industriels choisis en particulier parmi camionnettes et "poids-lourd" (i.e., métro, bus, engins de transport routier tels que camions, tracteurs).

L'invention ainsi que ses avantages seront aisément compris à la lumière de la description et des exemples de réalisation qui suivent.

## 4. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le bandage de l'invention a donc pour caractéristique essentielle que sa bande de roulement, à l'état non vulcanisé, comporte une composition de caoutchouc thermo-expansible au moins pour la partie supérieure de la bande de roulement qui vient directement en contact avec la surface de la route, ladite composition comportant au moins:

- un (au moins un) élastomère diénique ;
- 70 à 120 pce d'une (au moins une) charge renforçante ;
- entre 5 et 25 pce d'un (au moins un) agent d'expansion ;
- entre 5 et 25 pce d'un (au moins un) composé thermofusible dont la température de fusion est comprise entre 70°C et 150°C ;
- la teneur totale en agent d'expansion et composé thermofusible étant supérieure à 15 pce.

Les différents composants ci-dessus sont décrits en détail ci-après.

### 4.1. Elastomère diénique

Par élastomère (ou caoutchouc, les deux termes étant synonymes) du type "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, ainsi que par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ;

pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un mode de réalisation plus particulier et préférentiel, la composition de caoutchouc thermo-expansible comporte 50 à 100 pce de caoutchouc naturel ou de polyisoprène de synthèse, ledit caoutchouc naturel ou polyisoprène de synthèse pouvant être utilisé notamment en coupage (mélange) avec au plus 50 pce d'un polybutadiène ayant un taux de liaisons cis-1,4 supérieur à 90%.

Selon un autre mode de réalisation particulier et préférentiel, la composition de caoutchouc thermo-expansible comporte 50 à 100 pce d'un polybutadiène ayant un taux de liaisons cis-1,4 supérieur à 90%, ledit polybutadiène pouvant être utilisé notamment en coupage avec au plus 50 pce de caoutchouc naturel ou polyisoprène de synthèse.

Aux élastomères diéniques des bandes de roulement selon l'invention pourraient être associés, en quantité minoritaire, des élastomères synthétiques autre que diéniques, voire des polymères autres que des élastomères, par exemple des polymères thermoplastiques.

4.2. Charge

Toute charge connue pour ses capacités à renforcer une composition de caoutchouc est utilisable, par exemple une charge organique telle que du noir de carbone, ou encore une charge inorganique telle que de la silice à laquelle est associé de manière connue un agent de couplage.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le taux de charge renforçante totale (en particulier de la silice ou du noir de carbone ou un mélange de silice et de noir de carbone) est compris dans un domaine de 70 à 120 pce. Une teneur égale ou supérieure à 70 pce est favorable à une bonne tenue mécanique ; au-delà de 120 pce, il existe un risque de rigidité excessive de la couche de caoutchouc. Pour ces raisons, le taux de charge renforçante totale est plus préférentiellement compris dans un domaine de 75 à 115 pce.

Comme noirs de carbone conviennent par exemple tous les noirs de carbone qui sont conventionnellement utilisés dans les pneumatiques (noirs dits de grade pneumatique) tels que lés noirs des séries 100, 200, 300 (grades ASTM), comme par exemple les noirs N115, N134, N234, N326, N330, N339, N347, N375. Les noirs de carbone pourraient être par exemple déjà incorporés à l'élastomère diénique, notamment isoprénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que

soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber.

Selon un autre mode de réalisation particulièrement préférentiel, on utilise comme charge majoritaire une charge inorganique renforçante, en particulier de la silice, charge inorganique renforçante à laquelle peut être ajoutée avantageusement du noir de carbone à un taux minoritaire au plus égal à 15 pce, en particulier compris dans un domaine de 1 à 10 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) $Z\text{-}A\text{-}S_x\text{-}A\text{-}Z$,

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

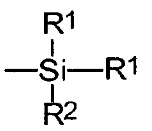 ; 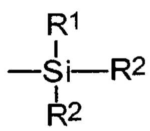 ; 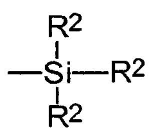 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfurés, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elles sont renforcées par une charge inorganique telle que silice, les compositions en caoutchouc comportent préférentiellement entre 2 et 15 pce, plus préférentiellement entre 3 et 12 pce d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

4.3. Agent d'expansion et composé thermofusible associé

De manière connue, un agent d'expansion (« *blowing agent* » en anglais) est un composé décomposable thermiquement, destiné à libérer lors d'une activation thermique, par exemple lors de la vulcanisation du bandage pneumatique, une quantité de gaz importante et ainsi conduire à la formation de bulles. La libération de gaz dans la composition de caoutchouc provient donc de cette décomposition thermique de l'agent d'expansion. Dans la plupart des cas, le gaz formé est de l'azote mais il arrive aussi, suivant la nature de l'agent d'expansion utilisé, que ce gaz contienne du dioxyde de carbone.

Il existe des agents d'expansion physiques ou chimiques, du type endothermiques ou exothermiques. On utilise préférentiellement des agents d'expansion chimiques, plus préférentiellement des agents d'expansion chimiques du type exothermiques.

Parmi les agents d'expansion utilisables préférentiellement, on citera notamment ceux choisis dans le groupe constitué par les composés azo, nitroso, hydrazines, carbazides, semi-carbazides, tetrazoles, carbonates, citrates et les mélanges de tels composés.

Ces agents d'expansion sont plus préférentiellement choisis dans le groupe constitué par les composés diazo, dinitroso, sulfonyl semicarbazides, sulfonyl hydrazides et les mélanges de tels composés. Parmi ces derniers, on peut citer plus particulièrement le dinitroso-pentane-éthylène tétramine, le dinitroso-pentane-styrène tétramine, l'azodicarbonamide, le N,N'-diméthyl-N,N'-dinitroso-phtalamide, le benzène sulfonyl-hydrazide, le toluène sulfonyl-hydrazide, le p,p'-oxy-bis-(benzenesulfonyl) hydrazide, le p-toluene sulfonyl semicarbazide ou encore le p,p'-oxy-bis-(benzenesulfonyl) semicarbazide ; dans ces exemples, le gaz formé est composé d'un mélange d'azote et de dioxyde de carbone.

Parmi les agents d'expansion ne dégageant que du dioxyde de carbone on peut citer par exemple les composés suivants : carbonates et bicarbonates de métaux alcalins ou alcalino-terreux tels que carbonate ou bicarbonate de sodium, carbonate ou bicarbonate d'ammonium, citrates tels que monocitrate de sodium, acide malonique, acide citrique.

Préférentiellement, le taux d'agent d'expansion est compris entre 8 et 20 pce.

Une caractéristique essentielle de l'invention est d'ajouter à l'agent d'expansion précédemment décrit un composé thermofusible dont la température de fusion est comprise entre 70°C et 150°C, de préférence entre 100°C et 150°C, plus préférentiellement entre 110°C et 140°C. La température de fusion est une constante physique de base bien connue (disponible par exemple dans *"Handbook of Chemistry and Physics"*) des composés thermofusibles, organiques ou inorganiques ; elle pourra être contrôlée par toute méthode connue, par exemple par la méthode de Thiele, la méthode du banc de Köfler ou encore par DSC.

Le taux de ce composé thermofusible est préférentiellement compris entre 8 et 20 pce. Il a pour fonction de se transformer en liquide dans le domaine de température spécifique indiqué ci-dessus, avant que ou au moment où l'agent d'expansion se décompose thermiquement et libère des bulles de gaz.

Tout composé présentant une température de fusion comprise entre 70°C et 150°C, de préférence entre 100 et 150°C, plus préférentiellement entre 110°C et 140°C, est susceptible de convenir. On pourra utiliser notamment les additifs de caoutchouterie connus de l'homme du métier comme étant compatibles, tant sous leur forme (par exemple sous forme de poudre) que par leur nature chimique, avec des compositions de caoutchouc usuelles pour bandages pneumatiques.

A titre d'exemple, on peut citer notamment des polymères thermoplastiques telles que polyéthylène ou polypropylène.

On peut également citer comme exemples des résines hydrocarbonées thermoplastiques à haute température de transition vitreuse (Tg), dont la température de fusion (ou ce qui est ici considéré comme équivalent, la température de ramollissement mesurée par exemple selon le méthode connue "*Ring and Ball*" - norme ISO 4625) est comprise entre 70°C et 150°C, de préférence entre 100 et 150°C, plus préférentiellement entre 110°C et 140°C.

La dénomination "résine" est réservée dans la présente demande, par définition connue de l'homme du métier, à un composé qui est solide à température ambiante (23°C), par opposition à un composé plastifiant liquide tel qu'une huile.

Ces résines hydrocarbonées sont des polymères bien connus de l'homme du métier, essentiellement à base de carbone et hydrogène, utilisables en particulier comme agents plastifiants ou agents tackifiants dans des matrices polymériques. Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De telles résines hydrocarbonées thermoplastiques peuvent être choisies par exemple dans le groupe constitué par les résines d'homopolymère ou copolymère de cyclopentadiène, les résines d'homopolymère ou copolymère de dicyclopentadiène, les résines d'homopolymère ou copolymère terpène, les résines d'homopolymères ou copolymères terpène phénol, les résines d'homopolymère ou copolymère de coupe C5, les résines d'homopolymère ou copolymère de coupe C9, les résines d'homopolymères ou copolymères d'alpha-méthyl-styrène et les mélanges de ces résines.

Selon un mode de réalisation particulièrement préférentiel, le composé thermofusible choisi est l'urée ou un dérivé thermofusible de l'urée. L'urée en particulier possède une température de fusion qui est bien adaptée à l'application visée.

Une caractéristique essentielle de l'invention, pour l'obtention d'une adhérence optimisée de la bande de roulement sur glace fondante, est que la quantité totale d'agent d'expansion et de composé thermofusible est supérieure à 15 pce, de préférence comprise entre 15 et 40 pce. Cette quantité totale est plus préférentiellement supérieure à 20 pce, en particulier comprise entre 20 et 40 pce, notamment entre 20 et 35 pce.

4.4. Additifs divers

La composition de caoutchouc thermo-expansible peut comporter également tout ou partie des additifs usuels habituellement utilisés dans les compositions de caoutchouc pour bandes de roulement de bandages pneumatiques, comme par exemple des agents de protection tels que cires anti-ozone, anti-ozonants chimiques, anti-oxydants, des agents plastifiants, des résines renforçantes, un système de réticulation à base soit de soufre, soit de donneurs de soufre et/ou de peroxyde et/ou de bismaléimides, des accélérateurs de vulcanisation, des activateurs de vulcanisation.

Selon un mode de réalisation préférentiel, la composition de caoutchouc thermo-expansible comporte également un agent plastifiant liquide (à 20°C) dont la fonction est de ramollir la matrice en diluant l'élastomère diénique et la charge renforçante ; sa Tg (température de transition vitreuse) est par définition inférieure à -20°C, de préférence inférieure à -40°C.

Plus préférentiellement, pour une performance optimale de la bande de roulement du bandage de l'invention, ce plastifiant liquide est utilisé à un taux relativement réduit, tel que le rapport pondéral charge renforçante sur agent plastifiant liquide soit supérieur à 2,0, plus préférentiellement supérieur à 2,5, en particulier supérieur à 3,0.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates*), les huiles TDAE (*Treated Distillate Aromatic Extracts*), les huiles minérales, les huiles végétales, les plastifiants éthers, les plastifiants esters, les plastifiants phosphates, les plastifiants sulfonates et les mélanges de ces composés.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les

composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour bandages pneumatiques.

La composition de caoutchouc thermo-expansible peut également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des aminés, des polyorganosiloxanes hydroxylés ou hydrolysables.

<u>4.5. Fabrication des compositions</u>

Les compositions de caoutchouc sont fabriquées dans des mélangeurs appropriés, en utilisant par exemple trois phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase (non-productive) à plus basse température (de préférence inférieure à 100°C) au cours de laquelle est incorporé l'agent d'expansion, enfin une troisième phase de travail mécanique (parfois qualifiée de phase "productive") à basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :

- incorporer dans un mélangeur, à l'élastomère ou au mélange d'élastomères, au moins la charge et le composé thermofusible en malaxant thermomécaniquement le tout, en une ou plusieurs fois, jusqu'à atteindre une température maximale comprise entre 130°C et 200°C ;
- refroidir l'ensemble à une température inférieure à 100°C ;
- puis incorporer l'agent d'expansion au mélange ainsi obtenu et refroidi, en malaxant thermomécaniquement le tout jusqu'à atteindre une température maximale inférieure à 100 C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, on introduit au cours de la première phase non-productive, dans un mélangeur approprié tel qu'un mélangeur interne usuel, tous les constituants nécessaires, les éventuels agents de recouvrement ou de mise en oeuvre complémentaires et autres additifs divers, à l'exception de l'agent d'expansion et du système de réticulation. Après travail thermomécanique, tombée et refroidissement du mélange ainsi obtenu, on conduit alors une seconde phase (non-productive) de travail thermomécanique dans le même mélangeur interne, phase au cours de laquelle est incorporé l'agent d'expansion à une température plus modérée (par exemple 60°C), pour atteindre une température maximale de tombée inférieure à 100°C. On incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type

thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore calandrée ou extrudée sous la forme d'une bande de roulement thermo-expansible.

A l'état cru (i.e., non vulcanisé) et donc non expansé, la densité ou masse volumique notée $D_1$ de la composition de caoutchouc thermo-expansible est de préférence comprise entre 1,100 et 1,400 g/cm$^3$, plus préférentiellement comprise dans un domaine de 1,150 à 1,350 g/cm$^3$.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc mousse et finalement à son expansion.

A l'état cuit (i.e., vulcanisé), la densité notée $D_2$ de la composition de caoutchouc une fois expansée (i.e., à l'état de caoutchouc mousse) est comprise de préférence entre 0,700 à 1,000 g/cm$^3$, plus préférentiellement comprise dans un domaine de 0,750 à 0,950 g/cm$^3$.

Son taux d'expansion volumique noté $T_E$ (exprimé en %) est de préférence compris entre 25% et 75%, plus préférentiellement dans un domaine de 30 à 60%, ce taux d'expansion $T_E$ étant calculé de manière connue à partir des densités $D_1$ et $D_2$ ci-dessus, comme suit :

$$T_E = [(D_1/D_2) - 1] \times 100.$$

5. <u>EXEMPLES DE REALISATION DE L'INVENTION</u>

La composition de caoutchouc thermo-expansible précédemment décrite est avantageusement utilisable dans les bandes de roulement de bandages pneumatiques hiver pour tout type de véhicule, en particulier dans les bandages pneumatiques pour véhicules tourisme, comme démontré dans les essais qui suivent.

Pour les besoins de ces essais, deux compositions de caoutchouc (notées C-0 et C-1) ont été préparées dont la formulation est donnée dans le tableau 1 (taux des différents produits exprimé en pce). La composition C-0 est la composition témoin, la composition C-1 est celle conforme à l'invention, comportant en plus l'agent d'expansion et le composé thermofusible. Le taux de plastifiant liquide a été ajusté dans la composition C-1 afin de maintenir la rigidité après cuisson au même niveau que celui de la composition témoin C-0 (dureté Shore A égale à environ 51 dans les deux cas, mesurée conformément à la norme ASTM D 2240-86).

Pour la fabrication de ces compositions, on a procédé de la manière suivante: on a introduit dans un mélangeur interne, dont la température initiale de cuve était d'environ 60°C, successivement la charge renforçante (silice), l'élastomère diénique (coupage NR et BR), le composé thermofusible (urée) pour la composition C-1, ainsi que les divers autres ingrédients à l'exception du système de vulcanisation et de l'agent d'expansion ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" d'environ 150°C. On a ensuite refroidi le mélange ainsi obtenu à une température inférieure à 100°C, réintroduit le mélange refroidi dans le même mélangeur interne (température initiale 60°C), puis pour la composition C-1 incorporé l'agent d'expansion (composé diazo) audit mélange (mélangeur rempli à environ 70% en volume). On a conduit alors un second travail thermomécanique (phase non-productive) en une étape d'environ 2 à 4 min, jusqu'à atteindre une température maximale de tombée inférieure à 100°C. On a récupéré le mélange ainsi obtenu, on l'a refroidi puis on a incorporé un accélérateur type sulfénamide et du soufre sur un mélangeur externe (homo-finisseur) à 30°C, en mélangeant le tout (phase productive) pendant quelques minutes.

Les compositions C-0 et C-1 ainsi préparées ont été ensuite utilisées comme bandes de roulement de bandages pneumatiques tourisme hiver à carcasse radiale, notés respectivement P-0 (bandages témoins) et P-1 (bandages conformes à l'invention), de dimensions 205/65 R15 conventionnellement fabriqués et en tous points identiques, hormis les compositions de caoutchouc constitutives de leur bande de roulement.

Le tableau 2 indique les propriétés mesurées avant et après cuisson : pour une dureté Shore équivalente, la bande de roulement du bandage pneumatique conforme à l'invention présente après cuisson, une fois à l'état de caoutchouc mousse (i.e., expansée), une densité nettement réduite correspondant à un taux d'expansion volumique particulièrement élevé, d'environ 47%.

Les pneumatiques P-0 et P-1 sont montés, sous pression de gonflage nominale, à l'avant et à l'arrière d'un véhicule automobile ("Honda Civic") équipé d'un système de freinage antiblocage (système ABS) et d'un système antipatinage à l'accélération (système TCS pour *Traction Control System*). On mesure la distance nécessaire pour passer de 20 à 5 km/h lors d'un freinage longitudinal brutal (ABS activé) sur une piste recouverte de glace maintenue à une température de -2°C (conditions dites de "glace fondante").

Après cette première série de tests sur bandages pneumatiques neufs, on fait subir à ces bandages un roulage sur circuit d'environ 10 000 km, sur un sol sec, pour début d'usure. Puis les pneumatiques ainsi partiellement usés sont de nouveau soumis aux tests d'adhérence sur glace tels que décrits ci-dessus.

L'ensemble des résultats des tests de roulage est rapporté dans le tableau 3, en unités relatives, la base 100 étant retenue pour le pneumatique témoin P-0. Une valeur supérieure à celle du témoin, arbitrairement fixée à 100, indique un résultat amélioré c'est-à-dire une distance de freinage plus courte.

On note que si une amélioration (6%) est déjà observée sur bandage pneumatique neuf, la distance de freinage sur glace fondante est augmentée de manière remarquable et inattendue, de près de 50% par rapport au bandage pneumatique témoin, après un roulage de 10 000 km. Ce résultat illustre très bien la capacité de la composition de caoutchouc mousse, une fois vulcanisée (expansée), à générer tout au long de l'utilisation du bandage pneumatique de l'invention, une microrugosité de surface particulièrement efficace et significative, ceci grâce à l'utilisation combinée d'un agent d'expansion et d'un composé thermofusible, aux taux élevés préconisés.

**Tableau 1**

| Composition N°: | C-0 | C-1 |
|---|---|---|
| BR (1) | 60 | 60 |
| NR (2) | 40 | 40 |
| silice (3) | 80 | 80 |
| agent de couplage (4) | 5 | 5 |
| noir de carbone (5) | 5 | 5 |
| agent d'expansion (6) | | 13.5 |
| composé thermofusible (7) | | 13.5 |
| plastifiant liquide (8) | 60 | 20 |
| DPG (9) | 1.5 | 1.5 |
| ZnO | 1.2 | 1.2 |
| acide stéarique | 1 | 1 |
| cire anti-ozone | 1.5 | 1.5 |
| antioxydant (10) | 2 | 2 |
| soufre | 2 | 2 |
| accélérateur (11) | 1.7 | 1.7 |

(1) BR avec 4,3% de 1-2 ; 2,7% de trans ; 97% de cis 1-4 (Tg = -104°C) ;
(2) caoutchouc naturel (peptisé) ;
(3) silice "Ultrasil 7000" de la société Degussa, type "HDS" (BET et CTAB : environ 160 $m^2/g$);
(4) agent de couplage TESPT ("Si69" de la société Degussa) ;
(5) grade ASTM N234 (société Cabot) ;
(6) azodicarbonamide ("Cellmic C-22" de la société Sankyo Kasei) ;
(7) urée (société Mitsui Chemical) ;
(8) huile MES ("Catenex SNR" société Shell)
(9) diphénylguanidine (Perkacit DPG de la société Flexsys) ;
(10) N-1,3-diméthylbutyl-N-phénylparaphénylènediamine (Santoflex 6-PPD de la société Flexsys);
(11) N-dicyclohexyl-2-benzothiazol-sulfénamide ("Santocure CBS" de la société Flexsys).

**Tableau 2**

| Composition testée : | C-0 | C-1 |
|---|---|---|
| Dureté Shore A | 52 | 50 |

(suite)

| Composition testée : | C-0 | C-1 |
|---|---|---|
| Densité avant cuisson du pneumatique | 1.14 | 1.21 |
| Densité après cuisson du pneumatique | 1.14 | 0.82 |
| Taux d'expansion volumique (%) | 0 | 47 |

**Tableau 3**

| Bandage pneumatique testé : | P-0 | P-1 |
|---|---|---|
| Freinage sur glace (-2°C) (1) | 100 | 106 |
| Freinage sur glace (-2°C) (2) | 100 | 143 |
| (1) bandage pneumatique à l'état neuf<br>(2) bandage pneumatique à l'étal partiellement usé | | |

## Revendications

1. Bandage dont la bande de roulement comporte, à l'état non vulcanisé, une composition de caoutchouc thermo-expansible comportant au moins un élastomère diénique, 70 à 120 pce (parties en poids pour cent parties d'élastomère) d'une charge renforçante, entre 5 et 25 pce d'un agent d'expansion, entre 5 et 25 pce d'un composé thermofusible dont la température de fusion est comprise entre 70°C et 150°C, la teneur totale en agent d'expansion et composé thermofusible étant supérieure à 15 pce.

2. Bandage selon la revendication 1, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

3. Bandage selon la revendication 2, dans lequel ladite composition de caoutchouc comporte 50 à 100 pce de caoutchouc naturel ou de polyisoprène de synthèse.

4. Bandage selon la revendication 3, dans lequel le caoutchouc naturel ou le polyisoprène de synthèse est utilisé en coupage au plus 50 pce d'un polybutadiène ayant un taux de liaisons cis-1,4 supérieur à 90%.

5. Bandage selon la revendication 2, dans lequel ladite composition comporte 50 à 100 pce d'un polybutadiène ayant un taux de liaisons cis-1,4 supérieur à 90%.

6. Bandage selon la revendication 5, dans lequel le polybutadiène est utilisé en coupage avec au plus 50 pce de caoutchouc naturel ou polyisoprène de synthèse.

7. Bandage selon l'une quelconque des revendications 1 à 6, dans lequel le taux de charge renforçante est compris dans un domaine de 75 à 115 pce.

8. Bandage selon l'une quelconque des revendications 1 à 7, dans lequel la composition de caoutchouc comporte en outre un agent plastifiant liquide à 20°C, à un taux tel que le rapport pondéral charge renforçante sur agent plastifiant liquide est supérieur à 2,0, de préférence supérieur à 2,5.

9. Bandage selon l'une quelconque des revendications 1 à 8, dans lequel l'agent d'expansion est choisi dans le groupe constitué par les composés azo, nitroso, hydrazines, carbazides, semi-carbazides, tetrazoles, carbonates, citrates et les mélanges de tels composés, de préférence choisi dans le groupe constitué par les composés diazo, dinitroso, sulfonyl semicarbazides, sulfonyl hydrazides et les mélanges de tels composés.

10. Bandage selon la revendication 9, dans lequel l'agent d'expansion est un composé azodicarbonamide.

11. Bandage selon l'une quelconque des revendications 1 à 10, dans lequel le taux d'agent d'expansion est compris entre 8 et 20 pce.

12. Bandage selon l'une quelconque des revendications 1 à 11, dans lequel le taux de composé thermofusible est compris entre 8 et 20 pce.

13. Bandage selon l'une quelconque des revendications 1 à 12, dans lequel la quantité totale d'agent d'expansion et de composé thermofusible est supérieure à 20 pce, de préférence comprise entre 20 et 40 pce.

14. Bandage selon l'une quelconque des revendications 1 à 13, dans lequel la température de fusion du composé thermofusible est comprise entre 100°C et 150°C, de préférence entre 110°C et 140°C.

15. Bandage selon l'une quelconque des revendications 1 à 14, dans lequel le composé thermofusible est l'urée ou un dérivé thermofusible de l'urée.

16. Bandage selon l'une quelconque des revendications 1 à 15, dans lequel la densité de la composition de caoutchouc thermo-expansible est comprise entre 1,100 et 1,400 g/cm$^3$, de préférence dans un domaine de 1,150 à 1,350 g/cm$^3$.

17. Bandage à l'état vulcanisé obtenu après cuisson d'un bandage pneumatique selon l'une quelconque des revendications 1 à 16, la composition de caoutchouc une fois expansée présentant de préférence une densité comprise entre 0,700 et 1,000 g/cm$^3$ et de préférence un taux d'expansion volumique compris entre 25 et 75%.

**Patentansprüche**

1. Reifen, dessen Lauffläche in unvulkanisiertem Zustand eine wärmeexpandierbare Kautschukzusammensetzung umfasst, die mindestens ein Dienelastomer, 70 bis 120 phe (Gewichtsteile pro 100 Teile Elastomer) eines verstärkenden Füllstoffs, zwischen 5 und 25 phe eines Blähmittels und zwischen 5 und 25 phe einer wärmeschmelzbaren Verbindung, deren Schmelztemperatur zwischen 70°C und 150°C liegt, umfasst, wobei der Gesamtgehalt an Blähmittel und wärmeschmelzbarer Verbindung über 15 phe liegt.

2. Reifen nach Anspruch 1, wobei das Dienelastomer aus der Gruppe bestehend aus Naturkautschuk, synthetischem Polyisoprenen, Polybutadienen, Butadien-Copolymeren, Isopren-Copolymeren und Mischungen dieser Elastomere ausgewählt ist.

3. Reifen nach Anspruch 2, wobei die Kautschukzusammensetzung 50 bis 100 phe Naturkautschuk oder synthetisches Polyisopren umfasst.

4. Reifen nach Anspruch 3, wobei der Naturkautschuk bzw. das synthetische Polyisopren als Verschnitt mit höchstens 50 phe eines Polybutadiens mit einem Gehalt an cis-1,4-Bindungen von mehr als 90% verwendet wird.

5. Reifen nach Anspruch 2, wobei die Zusammensetzung 50 bis 100 phe eines Polybutadiens mit einem Gehalt an cis-1,4-Bindungen von mehr als 90% umfasst.

6. Reifen nach Anspruch 5, wobei das Polybutadien als Verschnitt mit höchstens 50 phe Naturkautschuk oder synthetischem Polyisopren verwendet wird.

7. Reifen nach einem der Ansprüche 1 bis 6, wobei der Gehalt an verstärkendem Füllstoff im Bereich von 75 bis 115 phe liegt.

8. Reifen nach einem der Ansprüche 1 bis 7, wobei die Kautschukzusammensetzung außerdem einen bei 20°C flüssigen Weichmacher in einem solchen Gehalt, dass das Gewichtsverhältnis von verstärkendem Füllstoff zu flüssigem Weichmacher größer als 2,0 und vorzugsweise größer als 2,5 ist, umfasst.

9. Reifen nach einem der Ansprüche 1 bis 8, wobei das Blähmittel aus der Gruppe bestehend aus Azo-, Nitroso-, Hydrazin-, Carbazid-, Semicarbazid-, Tetrazol-, Carbonat- und Citratverbindungen und Mischungen derartiger Verbindungen ausgewählt ist und vorzugsweise aus der Gruppe bestehend aus Diazo-, Dinitroso-, Sulfonylsemicarbazid- und Sulfonylhydrazidverbindungen und Mischungen derartiger Verbindungen ausgewählt ist.

**10.** Reifen nach Anspruch 9, wobei es sich bei dem Blähmittel um eine Azodicarbonamid-Verbindung handelt.

**11.** Reifen nach einem der Ansprüche 1 bis 10, wobei der Gehalt an Blähmittel zwischen 8 und 20 phe liegt.

**12.** Reifen nach einem der Ansprüche 1 bis 11, wobei der Gehalt an wärmeschmelzbarer Verbindung zwischen 8 und 20 phe liegt.

**13.** Reifen nach einem der Ansprüche 1 bis 12, wobei die Gesamtmenge an Blähmittel und wärmeschmelzbarer Verbindung über 20 phe und vorzugsweise zwischen 20 und 40 phe liegt.

**14.** Reifen nach einem der Ansprüche 1 bis 13, wobei die Schmelztemperatur der wärmeschmelzbaren Verbindung zwischen 100°C und 150°C und vorzugsweise zwischen 110°C und 140°C liegt.

**15.** Reifen nach einem der Ansprüche 1 bis 14, wobei es sich bei der wärmeschmelzbaren Zusammensetzung um Harnstoff oder ein wärmeschmelzbares Harnstoffderivat handelt.

**16.** Reifen nach einem der Ansprüche 1 bis 15, wobei die Dichte der wärmeexpandierbaren Kautschukzusammensetzung zwischen 1,100 und 1,400 $g/cm^3$ und vorzugsweise in einem Bereich von 1,150 bis 1,350 $g/cm^3$ liegt.

**17.** Reifen in vulkanisiertem Zustand, erhalten nach Härtung eines Luftreifens nach einem der Ansprüche 1 bis 16, wobei die Kautschukzusammensetzung nach Expansion vorzugsweise eine Dichte zwischen 0,700 und 1,000 $g/cm^3$ und vorzugsweise ein Volumenexpansionsverhältnis zwischen 25 und 75% aufweist.

## Claims

**1.** Tyre, the tread of which comprises, in the unvulcanized state, a heat-expandable rubber composition comprising at least a diene elastomer, 70 to 120 phr (parts by weight per hundred parts of elastomer) of a reinforcing filler, between 5 and 25 phr of a blowing agent, between 5 and 25 phr of a thermofusible compound, the melting point of which is between 70°C and 150°C, the total content of blowing agent and thermofusible compound being greater than 15 phr.

**2.** Tyre according to Claim 1, in which the diene elastomer is selected from the group consisting of natural rubber, synthetic polyisoprenes, polybutadienes, butadiene copolymers, isoprene copolymers and the mixtures of these elastomers.

**3.** Tyre according to Claim 2, in which said rubber composition comprises 50 to 100 phr of natural rubber or of synthetic polyisoprene.

**4.** Tyre according to Claim 3, in which the natural rubber or the synthetic polyisoprene is used as a blend with at most 50 phr of a polybutadiene having a content of cis-1,4 bonds of greater than 90%.

**5.** Tyre according to Claim 2, in which said composition comprises 50 to 100 phr of a polybutadiene having a content of cis-1,4 bonds of greater than 90%.

**6.** Tyre according to Claim 5, in which the polybutadiene is used as a blend with at most 50 phr of natural rubber or a synthetic polyisoprene.

**7.** Tyre according to any one of Claims 1 to 6, in which the content of reinforcing filler is within a range of from 75 to 115 phr.

**8.** Tyre according to any one of Claims 1 to 7, in which the rubber composition further comprises a plasticizing agent that is liquid at 20°C, in a content such that the weight ratio of reinforcing filler to liquid plasticizing agent is greater than 2.0, preferably greater than 2.5.

**9.** Tyre according to any one of Claims 1 to 8, in which the blowing agent is selected from the group consisting of azo, nitroso, hydrazine, carbazide, semicarbazide, tetrazole, carbonate, citrate compounds, and mixtures of such compounds, preferably selected from the group consisting of diazo, dinitroso, sulphonyl semicarbazide, sulphonyl hydrazide compounds, and mixtures of such compounds.

**10.** Tyre according to Claim 9, in which the blowing agent is an azodicarbonamide compound.

**11.** Tyre according to any one of Claims 1 to 10, in which the content of blowing agent is between 8 and 20 phr.

**12.** Tyre according to any one of Claims 1 to 11, in which the content of thermofusible compound is between 8 and 20 phr.

**13.** Tyre according to any one of Claims 1 to 12, in which the total amount of blowing agent and of thermofusible compound is greater than 20 phr, preferably between 20 and 40 phr.

**14.** Tyre according to any one of Claims 1 to 13, in which the melting point of the thermofusible compound is between 100°C and 150°C, preferably between 110°C and 140°C.

**15.** Tyre according to any one of Claims 1 to 14, in which the thermofusible compound is urea or a thermofusible derivative of urea.

**16.** Tyre according to any one of Claims 1 to 15, in which the density of the heat-expandable rubber composition is between 1.100 and 1.400 g/$cm^3$, preferably within a range of from 1.150 to 1.350 g/$cm^3$.

**17.** Tyre in the vulcanized state, obtained after curing a pneumatic tyre according to any one of Claims 1 to 16, the rubber composition once it is expanded having a density of between 0.700 and 1.000 g/$cm^3$, and preferably a volume expansion ratio between 25% and 75%.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3878147 A
- JP 3159803 A
- JP 2002211203 A
- EP 940435 A
- WO 2008080750 A
- WO 2008080751 A
- WO 2009083125 A
- WO 2009112220 A
- JP 2003183434 A
- JP 2004091747 A
- JP 2006299031 A
- JP 2007039499 A
- JP 2007314683 A
- JP 2008001826 A
- JP 2008150413 A
- EP 826522 A
- US 5147477 A
- US 6336487 B
- EP 969040 A
- JP 4368205 A
- US 6013718 A
- US 5977238 A
- US 6815473 B
- US 20060089445 A
- US 6503973 B
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 02088238 A